(19) Europäisches Patentamt
European Patent Office
Office européen des brevets

(11) **EP 2 460 655 B1**

(12) **EUROPEAN PATENT SPECIFICATION**

(45) Date of publication and mention
of the grant of the patent:
**20.08.2014 Bulletin 2014/34**

(51) Int Cl.:
**B32B 27/18** (2006.01)   **B01J 35/02** (2006.01)
**B08B 17/00** (2006.01)   **B01J 35/00** (2006.01)
**B32B 27/32** (2006.01)   **B32B 27/30** (2006.01)

(21) Application number: **09847771.4**

(22) Date of filing: **31.07.2009**

(86) International application number:
**PCT/JP2009/003637**

(87) International publication number:
**WO 2011/013176 (03.02.2011 Gazette 2011/05)**

(54) **ANTIFOULING SHEET**

ANTIFOULING-LAGE

FEUILLE ANTISALISSURE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**06.06.2012 Bulletin 2012/23**

(73) Proprietors:
• **Kanbo Pras Corporation
Osaka 541-0054 (JP)**
• **Daiwabo Holdings Co., Ltd.
Osaka-shi, Osaka 541-0056 (JP)**

(72) Inventor: **OGAWA, Noriaki
Fukui 916-0015 (JP)**

(74) Representative: **Van Breda, Jacobus et al
Octrooibureau Los & Stigter B.V.,
Weteringschans 96
1017 XS Amsterdam (NL)**

(56) References cited:
**EP-A1- 1 650 023      JP-A- 9 207 289
JP-A- 11 010 802       JP-A- 2001 011 408
JP-A- 2005 041 117     JP-A- 2005 271 490
JP-A- 2005 271 490**

**Description**

Technical Field

The present invention relates to an antistaining sheet, in particular, an antistaining sheet including a base material sheet and a self-collapsing antistaining layer formed on the surface of the base material sheet.

Background Art

As an antistaining sheet including a base material sheet and a self-collapsing antistaining layer formed on the surface of the base material sheet, an antistaining sheet disclosed in JP2005-271490A may be quoted.

The antistaining sheet is such that a self-collapsing antistaining layer is formed on the surface of a fabric as a base material sheet. The self-collapsing antistaining layer includes a photocatalyst and a thermoplastic resin that is decomposed by the redox action of the photocatalyst.

In the case where an antistaining sheet having such a structure is used for materials for outdoor use such as warehouse roofing materials and truck cover materials, the photocatalyst receives photoenergy when the antistaining layer is irradiated with light such as sunlight, exposes the photocatalyst itself onto the surface of the antistaining layer while decomposing the thermoplastic resin present as surrounding the photocatalyst, and thus develops the redox action of the photocatalyst, namely, the antistaining action.

As another known antistaining sheet, JP09-078454A discloses a sheet for outdoor use in which a photocatalyst particle-containing hydrophilic surface layer is formed on the outer surface of a sheet material. In the sheet for outdoor use, the photocatalytic effect increases the hydrophilicity of the sheet surface and consequently the stains are cleaned with rain water or the like.

As yet another known antistaining sheet, JP2005-042257A discloses a photocatalytic sheet in which the uppermost layer of the base material is coated with a photocatalyst-containing fluororesin layer, wherein the surface of the fluororesin layer has a water repellency. In this sheet, the sheet surface layer is made water repellent so as for stains to hardly adhere to the sheet surface layer, and additionally, the adhering stains are decomposed by the photocatalyst.

As still yet another known antistaining sheet, JP2001-064583A discloses an antistaining sheet in which a photocatalyst coating composition including as essential components a silicone acrylic resin, particles of a photocatalyst and an aqueous solvent is applied onto a base material to form a film in such a way that the particles of the photocatalyst develop a concentration gradient in the film thickness direction. The provision of the concentration gradient in the content of the photocatalyst is for the purpose of preventing the interface of the base material from the deterioration due to the photocatalyst. The coating film formed with the photocatalyst coating composition develops the photocatalytic capability and the hydrophilizing capability of the photocatalyst to attain hydrophilicity, antistaining property and antifogging property. Additionally, this photocatalyst coating composition uses a silicone acrylic resin that contains a silicone component having a bonding strength sufficient to withstand the decomposing capability due to a photocatalytic reaction, for the purpose of preventing the photocatalyst-containing coating film itself formed by application onto the base material from decomposition and deterioration.

Disclosure of the Invention

Problems to be Solved by the Invention

Although the antistaining sheet of JP2005-271490A is excellent in antistaining property, the self-collapse of the antistaining layer proceeds rapidly by just that much. Specifically, the antistaining layer develops a function to maintain a clean surface condition substantially free from stains adhering thereto in such a way that the particulate photocatalyst decomposes, as described above, the thermoplastic resin present as surrounding the photocatalyst and thus the antistaining layer with the stains adhering thereto is made to self-collapse. Therefore, when a demanded antistaining property is intended to be developed at an early stage, it is necessary to enhance the capability of decomposing the thermoplastic resin, and accordingly, the self-collapse comes to proceed rapidly to shorten the period in which the antistaining layer collapses to disappear.

In this connection, materials such as warehouse roofing materials and truck cover materials are usually required to have a service life of about 10 years, and hence it is necessary to form the antistaining layer so as to have the thickness to meet such a requirement. However, a too thick antistaining layer is impractical, causes troubles in high-frequency welding or in heat welding for manufacturing a big product by using a plurality of antistaining sheets, and additionally, causes a cost increase.

As another countermeasure, it is possible to degrade the self-collapsing property, for example, by reducing the amount of the photocatalyst in the antistaining layer. However, such a way significantly delays the time of starting to display the demanded antistaining performance. In more detail, particularly at the early stage of starting to use an antistaining sheet, the photocatalyst is mostly embedded in the interior portion of the antistaining layer to result in a condition that the photocatalyst is not present in a demanded amount in the surface portion. In such a case, when the self-collapsing property is low, it takes an appropriate time to expose the demanded amount of the photocatalyst by decomposing the thermoplastic resin on the surface. Consequently, at the early stage of starting to use the antistaining sheet, no demanded antistaining performance can be attained.

The antistaining sheets of JP09-078454A, JP2005-042257A and JP2001-064583A each attain the antistaining effect by making the surface thereof hydrophilic or water-repellent. Any of these antistaining sheets has a structure in which the surface layer is essential for removing the stains, and accordingly the surface layer is devised so as not to be decomposed and deteriorated by the decomposition action of the photocatalyst. However, these sheets cannot completely remove the stains; in particular, stains that cannot be decomposed by the photocatalyst, namely, the stains due to sand, metal rust Powders or the like are gradually accumulated with the duration of use of the sheets.

Accordingly, an object of the present invention is to enable, by solving these problems, the maintenance of the demanded antistaining property from the start of the use thereof over a long period of time, in an antistaining sheet in which a self-collapsing layer is formed on the surface of the base material sheet, without forming the antistaining layer so as to be thick.

Means for Solving the Problems

For the purpose of achieving the object, the antistaining sheet of the present invention shall include a base material sheet and an antistaining layer formed on a surface of the base material sheet, wherein: the antistaining layer includes two or more layers inclusive of an inner layer and a surface layer stronger in self-collapsing property than the inner layer; the inner layer and the surface layer each comprise a photocatalyst and a thermoplastic resin to be decomposed by the photocatalyst, and thus have a self-collapsing property; and the content of the photocatalyst in the surface layer is higher than that of the inner layer, such that the self-collapsing property of the antistaining layer is stronger in a surface portion of the antistaining layer than in an interior portion of the antistaining layer.

Alternatively, the antistaining layer can also be specified in such a way that the surface portion of the antistaining layer is faster in a rate of decomposition of the thermoplastic resin by the photocatalyst than the interior portion of the antistaining layer.

With such a structure, the surface portion of the antistaining layer is stronger in the self-collapsing property than the interior portion, and hence in the surface portion, the thermoplastic resin is more rapidly decomposed by the photocatalyst. Consequently, the stains and the dust adhering to the surface of the antistaining layer are removed in accompanying the self-collapse of the antistaining layer, and hence the antistaining sheet rapidly develops the demanded antistaining effect from the early stage immediately after the start of the use thereof. Thereafter, the surface portion of the antistaining layer collapses sooner or later, and the interior portion, which is not so strong in self-collapsing property as the surface portion, gradually appears on the surface of the antistaining layer. Consequently, the demanded antistaining performance continues to be displayed over a long period of time.

Advantage of the Invention

According to the present invention, an antistaining sheet, including a structure having a self-collapsing antistaining layer on the surface of the base material sheet, can maintain a demanded antistaining property over a long period of time from the start of the use of the antistaining sheet, without forming the antistaining layer so as to be thick.

Brief Description of the Drawings

FIG. 1 is a sectional view of the main portion of an embodiment of the antistaining sheet of the present invention;
FIG. 2 is a sectional view of the main portion of another embodiment of the antistaining sheet of the present invention;
FIG. 3 is a sectional view of the main portion of a yet another embodiment of the antistaining sheet of the present invention;
FIG. 4 is a sectional view of the main portion of a still yet another embodiment of the antistaining sheet of the present invention;
FIG. 5 is a graph showing the time variation of the contact angle, namely, the rise-up angle of the surface of a drop of water attached to the surface of an antistaining layer; and
FIG. 6 is a graph showing the time variation of the film thickness retention rate of an antistaining layer in the antistaining sheet.

Embodiment of the Invention

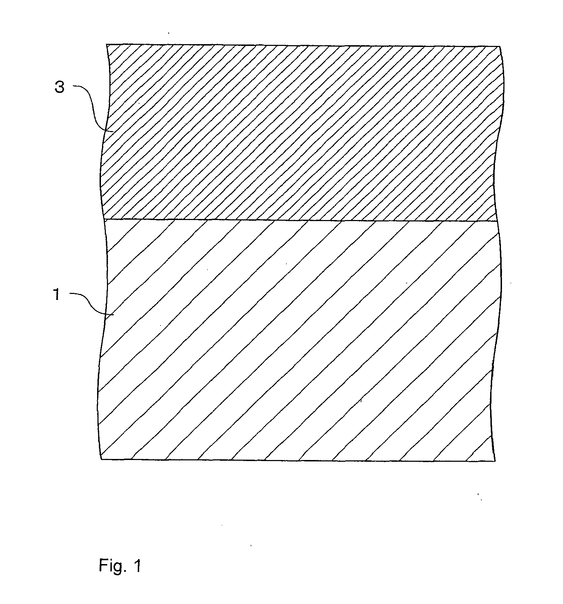

In an embodiment of the antistaining sheet of the present invention shown in FIG. 1, an antistaining layer 3 is laminated on the surface of a base material sheet 1.

For the base material sheet 1, there can be used any sheet materials such as resin films; resin sheets; and fabrics such as woven fabric, knitted fabric, non-woven fabric and nets. Additionally, laminated sheet materials may be used. Preferable among these are fabrics having durability for outdoor use because the antistaining sheet of the present invention is mainly used outdoors. Preferable examples of such sheet materials may include fabrics having a predetermined fabric basis weight.

When fabrics are used, the base material sheet may be fabrics made of: polyesters such as polyethylene terephthalate; polyolefins such as polyethylene, polypropylene, polyvinyl alcohol and polyvinyl chloride; polyamides such as nylon 6 and nylon 66; and aromatic polyamides such as polyparaphenylene terephthalamide (Kevlar (trademark)), or alternatively may be glass cloth or carbon fiber cloth. Preferable among these are fabrics made of polyester, from the viewpoint of being low in cost and excellent in dimensional stability. Also, when the base material sheet is a resin film or a resin sheet, such a sheet or film may be formed of the above-described polymers.

Alternatively, the base material sheet is preferably a resin-impregnated material prepared by impregnating a fabric with a synthetic resin or a laminate prepared by forming a synthetic resin layer on the surface of a fabric. Examples that may be used as the synthetic resin as referred to herein include: polyesters such as polyethylene terephthalate; polyolefins such as polypropylene, polyvinyl chloride and ethylene-vinyl alcohol copolymer; and polyurethane. Preferable among these is polyvinyl chloride, from the viewpoint of being excellent in high-frequency exothermicity.

The thickness of the base material sheet is preferably 50 $\mu$m to 10 mm, and more preferably 200 $\mu$m to 3 mm.

Examples of the processing technique for laminating an antistaining layer 3 on the surface of the base material sheet 1 include techniques such as laminating, coating, padding, calendering and extrusion laminating. Preferable among these techniques is the coating technique, from the viewpoint of easiness in controlling the thickness of the antistaining layer 3.

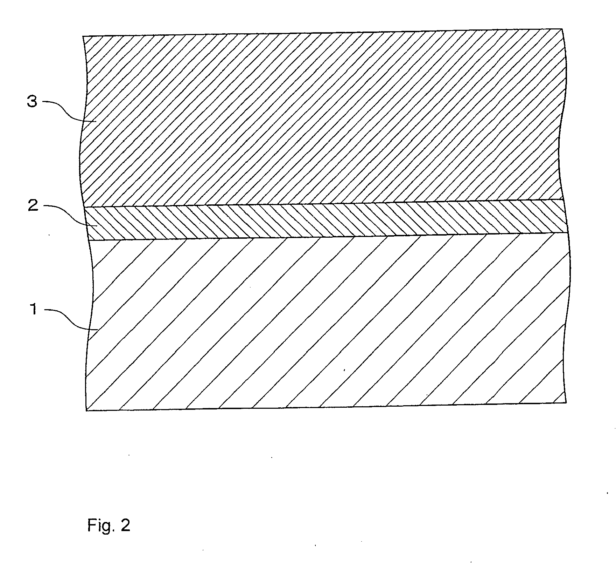

Where necessary, as shown in FIG. 2, an adhesive layer 2 can be disposed between the base material sheet 1 and the antistaining layer 3. The adhesive layer 2 is usefully used in the case where the compatibility or adhesiveness between the base material sheet 1 and the antistaining layer 3 is unsatisfactory. The adhesive used in the adhesive layer 2 is not particularly limited as long as the adhesive has a sufficient weather resistance and the adhesive strength. Examples of such an adhesive may include vinyl chloride resin, vinyl chloride-vinyl acetate copolymer, acrylic resin, urethane resin, fluororesin, chlorinated polyethylene, ethylene-vinyl acetate copolymer, and the mixtures of these. In particular, the adhesive is preferably an adhesive including as the ingredients thereof acrylic resins such as polyacrylic acid, polymethacrylic acid, polyalkyl acrylate, polyalkyl methacrylate, from the viewpoint of being excellent in the compatibility with the antistaining layer 3 including a photocatalyst as described below.

Next, the antistaining layer 3 is described. The antistaining layer 3 includes a photocatalyst and a thermoplastic resin to be decomposed by the photocatalyst (hereinafter, also simply referred to as "thermoplastic resin"). The antistaining layer preferably includes a fluororesin in addition to the above-described ingredients. In other words, the antistaining layer preferably includes a photocatalyst, a fluororesin and a thermoplastic resin to be decomposed by the photocatalyst. Additionally, the antistaining layer 3 may also contain an inorganic ultraviolet screening agent, an ultraviolet absorber, and the like.

Examples of the thermoplastic resin included in the antistaining layer 3 may include those thermoplastic resins that are decomposed by the redox action of the photocatalyst, such as vinyl chloride resin, vinyl chloride-vinyl acetate copolymer, acrylic resin, urethane resin, chlorinated polyethylene, ethylene-vinyl acetate copolymer, and any mixture of these. The antistaining layer 3 preferably includes the thermoplastic resin in a content of 10% by mass to 100% by mass in relation to 100% by mass of the resin component constituting the antistaining layer 3. Such a composition enables to maintain a clean surface condition owing to the below-described self-collapse of the thermoplastic resin.

When the antistaining layer 3 includes a fluororesin in addition to the thermoplastic resin, the antistaining layer 3 preferably includes the thermoplastic resin in a content of 10% by mass to 50% by mass, more preferably, 20% by mass to 40% by mass in relation to 100% by mass of the resin component constituting the antistaining layer 3. In such a case, the inclusion of the thermoplastic resin in the antistaining layer 3 in a content of 10% by mass to 50% by mass permits attaining a satisfactory self-collapsing property.

As described above, the antistaining layer 3 preferably includes a fluororesin in addition to the thermoplastic resin, as the resin component constituting the antistaining layer 3. The inclusion of a fluororesin in the antistaining layer 3 slows the rate of the self-collapse, due to the fact that the fluororesin is comparatively hardly decomposed by the photocatalyst, and thus the demanded antistaining performance is displayed over a long period of time. Additionally, due to the water repellency and the oil repellency characteristic of the fluororesin, the surface of the antistaining sheet is hardly stained at the early stage of the use of the antistaining sheet.

The fluororesin is only required to be slower than the thermoplastic resin in the rate of the decomposition by the photocatalyst. Examples of such a fluororesin may include polyvinylidene fluoride (PVDF), a binary or higher copolymer containing at least the polyvinylidene fluoride (PVDF) unit, and a mixture of these. Examples of the binary or higher copolymer containing the polyvinylidene fluoride (PVDF) unit may include polyvinylidene fluoride (PVDF)-tetrafluoroethylene (PTFE) copolymer, polyvinylidene fluoride (PVDF)-hexafluoropropylene (PHFP) copolymer and polyvinylidene fluoride (PVDF)-hexafluoropropylene (PHFP)-tetrafluoroethylene (PTFE) copolymer.

The fluororesin is preferably a soft fluororesin (hereinafter, also referred to as a "fluoroelastomer"). When the fluororesin is a soft fluororesin, the sheet hardly undergoes the occurrence of chaps and cracks, and is thus excellent in handleability.

When the antistaining layer 3 includes a fluororesin, the antistaining layer 3 may include the fluororesin in a content of more than 0% by mass to 90% by mass or less, preferably includes in a content of 50% by mass to 90% by mass, and more preferably in a content of 60% by mass to 80% by mass in relation to 100% by mass of the resin component constituting the antistaining layer 3. When the content of the fluororesin is 90% by mass or less, the self-collapse of the antistaining layer 3 is not disturbed.

Alternatively, from the viewpoint of slowing the rate of the self-collapse of the antistaining layer 3, the antistaining layer 3 may include, as the resin component constituting the antistaining layer 3 in addition to the thermoplastic resin, a persistent resin, other than the fluororesin, slower in the rate of the decomposition by the photocatalyst than the thermoplastic resin, in a content falling in a range of more than 0% by mass to 90% by mass or less in relation to 100% by mass of the resin component constituting the antistaining layer 3. Examples of such a resin include: silicone resins such as acrylic silicone copolymer and urethane silicone copolymer; and thermoplastic resins or thermosetting resins processed or modified so as to be hardly decomposed by the photocatalyst.

The resin component constituting the antistaining layer 3 means the sum of the thermoplastic resin, and the fluororesin and/or the persistent resin added where necessary.

The photocatalyst means a material which undergoes the creation of the oxidizing ability on the surface thereof by ultraviolet light irradiation, and decomposes organic substances by the redox action of the oxidizing ability. Such a photocatalyst is preferably a photocatalyst including one or more materials selected from $TiO_2$, $ZnO$, $SrTiO_3$, $CdS$, $InP$, $CaAs$, $BaTiO_3$, $KNbO_3$, $Fe_2O_3$, $Ta_3O_5$, $WO_3$, $SnO_2$, $Bi_2O_3$, $NiO$; $Cu_2O$, $SiC$, $MoS_2$, $InPb$, $RuO_2$ and $CeO_2$. However, the photocatalyst is not particularly limited, and only required to be a substance capable of developing a redox action with respect to the thermoplastic resin. The photocatalyst may be present in the antistaining layer 3 in a form of a particulate material having a particle size of preferably 10 nm to 10 $\mu$m, and more preferably about 10 nm to 5 $\mu$m. The antistaining layer 3 is only required to include the photocatalyst to such an extent that enables the photocatalyst to sufficiently decompose the thermoplastic resin. The average content of the photocatalyst is, in relation to 100 parts by mass of the resin component constituting the antistaining layer, preferably 0.01 part by mass to 15 parts by mass in terms of the solid content of the photocatalyst, and more preferably 0.01 part by mass to 10 parts by mass in terms of the solid content of the photocatalyst. The photocatalyst may be present as an aggregation of two or more particles. The content of the photocatalyst may be set to fall outside the above-described ranges according to the particle size of the photocatalyst or the strength of the decomposition action of the photocatalyst. For example, when a photocatalyst having a relatively small particle size or a photocatalyst having a strong decomposition action is used as the photocatalyst, the content of the photocatalyst may be reduced; on the other hand, when a photocatalyst having a relatively large particle size or a photocatalyst having a weak decomposition action is used as the photocatalyst, the content of the photocatalyst may be increased. In the present invention, as described below, the content of the photocatalyst is varied in the thickness direction of the antistaining layer 3 as the case may be.

The photocatalyst is preferably a mixture composed of the above-described photocatalyst material and an inorganic material such as a metal or a metal oxide, or a coated material prepared by coating the above-described photocatalyst material with an inorganic material such as a metal or a metal oxide. Preferable among these is a mixture composed of titanium dioxide and silicon dioxide or a coated material prepared by coating titanium dioxide with silicon dioxide; or alternatively a mixture composed of titanium dioxide and calcium phosphate (hereinafter, also referred to as apatite) or a coated material prepared by coating titanium dioxide with calcium phosphate. When the photocatalyst is a mixture composed of the above-described photocatalyst material and the inorganic material such as a metal or a metal oxide or a coated material prepared by coating the above-described photocatalyst material with an inorganic material such as a metal or a metal oxide, the decomposition action due to the redox action of the photocatalyst can be suppressed to an appropriate extent.

Preferable as an example of the photocatalyst is, for example, a photocatalyst subjected to a specific surface treatment, commercially being offered by Showa Denko K.K. as "Jupiter (trade name)," more specifically, a photocatalyst prepared by coating the surface of fine particles of titanium oxide with apatite. This product may also be referred to as a titanium oxide-apatite composite fine powder for use in photocatalyst; this product has an apatite layer formed on the surface of titanium oxide, and hence has an effect to hardly decompose the thermoplastic resin in the antistaining layer 3.

The inorganic ultraviolet screening agent that can be included in the antistaining layer 3 is not particularly limited as long as the agent does not develop the photocatalytic action even when the agent receives ultraviolet light and does not transmit ultraviolet light. In particular, examples of such an inorganic ultraviolet screening agent may include agents prepared by supporting, on spherical silica fine particles, titanium oxide, zinc oxide and cerium oxide having a particle size of 0.1 nm to 50 nm. The reasons for that the agents prepared by supporting on spherical silica fine particles are preferable are ascribable to the fact that the effects of these inorganic ultraviolet screening agents are improved by reducing the particle size thereof to an ultrafine particle size falling within the above-described range, and on the other hand, ascribable to the fact that these ultrafine particle materials are high in surface activity, and hence cause through the catalytic action thereof the modification of other ingredients.

The use of the inorganic ultraviolet screening agent enables to form a structure which prevents the photocatalyst present in the interior portion of the antistaining layer 3 from being reached by ultraviolet light to an excessive extent. Accordingly, the thermoplastic resin can be prevented from being decomposed wholly starting from the interior portion of the antistaining layer 3 in contrast to the decomposition, intended by the present invention, starting from the surface side of the antistaining layer 3. The use of the inorganic ultraviolet screening agent also enables to prevent the base material sheet 1 from being photodeteriorated by ultraviolet light and from being reduced in the strength thereof.

When the inorganic ultraviolet screening agent is included in the antistaining layer 3, the content of the inorganic ultraviolet screening agent is preferably 0.2 part by mass to 5 parts by mass in relation to 100 parts by mass of the resin component constituting the antistaining layer 3.

Examples of the ultraviolet absorber that can be included in the antistaining layer 3 may include organic ultraviolet absorbers based on benzotriazole, salicylic acid and benzophenone. The use of the ultraviolet absorber enables to prevent the base material sheet from being photodeteriorated by ultraviolet light and from being reduced in the strength thereof. When the ultraviolet absorber is included in the antistaining layer 3, the content of the ultraviolet absorber is preferably 0.05 part by mass to 5 parts by mass in relation to 100 parts by mass of the resin component constituting the antistaining layer 3.

The antistaining layer 3 may further include additives such as a light stabilizer and a colorant.

The antistaining effect in the antistaining sheet of the present invention is described. In the antistaining sheet of the present invention, the photocatalyst decomposes the thermoplastic resin on the surface portion receiving the sunlight, and consequently the components constituting the antistaining layer 3 are gradually collapsed on the surface portion of the antistaining sheet. Thus, the clean surface free from stains adhering thereto is newly exposed, and the clean surface condition free from stains adhering thereto can be maintained.

More specifically, when the antistaining sheet is used outdoors, the particulate photocatalyst included in the antistaining layer 3 receives light energy to decompose the thermoplastic resin present as surrounding the photocatalyst. Then, the photocatalyst is exposed on the surface layer of the antistaining layer 3, and develops the antistaining action to decompose organic stains such as oil or fat owing to the specific redox action. However, even when such antistaining action due to the photocatalyst is developed, inorganic stains such as sand and metal rust are not decomposed by the photocatalyst to remain in the area surrounding the photocatalyst. Consequently, stains gradually adhere to the surface of the antistaining layer 3. However, in the antistaining layer 3 with stains adhering thereto, the thermoplastic resin is gradually decomposed by the photocatalyst as described above, and consequently, the components remaining undecomposed of the components constituting the antistaining layer 3 collapse from the surface of the antistaining layer 3. Thus, the antistaining layer 3, namely, the surface of the antistaining sheet can maintain the clean condition substantially free from stains adhering thereto over a long period of time.

In the course of the process in which in the antistaining layer 3, the thermoplastic resin is decomposed by the photocatalyst and the other components collapse, the antistaining layer 3 may be temporarily in a condition of having holes or a condition of being porous.

The detailed structure of the antistaining layer 3 is described. In the present invention, the antistaining layer 3 is formed in such a way that the surface portion of the antistaining layer 3 is stronger in the self-collapsing property than the interior portion of the antistaining layer 3.

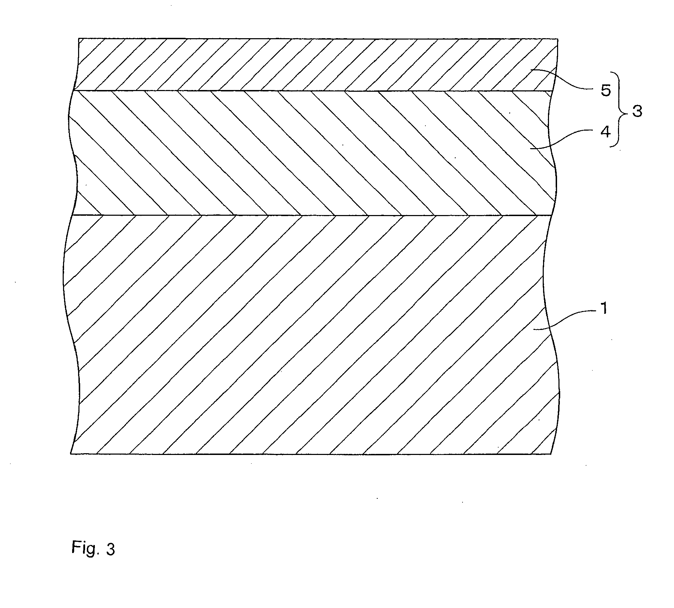

For example, as shown in FIG. 3, the antistaining layer 3 is formed of two or more layers including a surface layer 5 and an inner layer 4, and by making the surface layer 5 higher in the content of the photocatalyst than the inner layer 4, the antistaining layer 3 can be formed in such a way that the surface layer 5 is stronger in the self-collapsing property than the inner layer 4. In this case, the surface layer 5 means the layer farthermost from the base material sheet 1, of the layers forming the antistaining layer 3, and the inner layer 4 means the layer closer to the base material sheet 1 than the surface layer 5, of the layers forming the antistaining layer 3. When the antistaining layer 3 is formed of three or more layers, the inner layer 4 is formed of two or more layers. However, from the viewpoint of making the production step easy, the antistaining layer 3 is preferably formed of two layers, namely, the surface layer 5 and the inner layer 4.

When the antistaining layer 3 is formed of two or more layers, the ratio of the content of the photocatalyst in the surface layer 5 to the content of the photocatalyst in the inner layer 4 is preferably set at 1500:1 to 5:3, more preferably set at 20:1 to 3:1. Here, the content of the photocatalyst means the ratio of the contained amount of the photocatalyst to the contained amount of the resin component forming the surface layer 5 or the inner layer 4. When the content ratio of the photocatalyst between the respective layers is in the above-described range, the excellent self-collapsing property in the early stage and the maintenance of the self-collapsing property over a long period of time can be made compatible with each other.

In this case, the content of the photocatalyst in the surface layer 5 is preferably 5 parts by mass to 15 parts by mass in terms of the solid content of the photocatalyst in relation to 100 parts by mass of the resin component constituting the surface layer 5. When the content of the photocatalyst in the surface layer 5 is 5 parts by mass or more in relation to 100 parts by mass of the resin component, the self-collapsing property in the early stage is excellent, and when the content of the photocatalyst in the surface layer 5 is 15 parts by mass or less in relation to 100 parts by mass of the resin component, the excessive amount of the photocatalyst is small, and hence the advantageous effect of the present invention can be attained with a low cost.

The content of the photocatalyst in the inner layer 4 is preferably 0.01 part by mass to 3 parts by mass in terms of the solid content of the photocatalyst in relation to 100 parts by mass of the resin component constituting the inner layer 4. When the content of the photocatalyst in the inner layer 4 is 0.01 part by mass or more in relation to 100 parts by mass of the resin component, the thermoplastic resin can be decomposed satisfactorily, and when the content of the photocatalyst in the inner layer 4 is 3 parts by mass or less in relation to 100 parts by mass of the resin component, the rate of the self-collapse is not too fast, and the advantageous effect of the present invention can be maintained over a long period of time.

When the antistaining layer 3 is composed of three or more layers, the inner layer 4 may be formed of the deepest layer located in a position closest to the base material sheet 1, and one or two or more intermediate layers located between the surface layer and the deepest layer. The content of the photocatalyst in the intermediate layer(s) is not particularly limited, but is preferably equal to or less than the content of the photocatalyst in the surface layer. The content of the photocatalyst in the deepest layer is preferably equal to or less than the content of the photocatalyst in the intermediate layer. When the antistaining layer 3 has such a structure, the advantageous effect of the present invention can be maintained over a long period of time. It is to be noted that when the inner layer is formed of the deepest layer and the intermediate layer(s), the above-described content ratio and content of the photocatalyst in the inner layer can be obtained by regarding the inner layer as a single layer.

When the antistaining layer 3 is formed of two or more layers, the ratio of the thickness of the surface layer 5 to the thickness of the inner layer 4 is preferably 1:1 to 1:30, and more preferably 5:8 to 1:15. When the content ratio of the photocatalyst between the respective layers is in the above-described range, the excellent self-collapsing property in the early stage and the maintenance of the self-collapsing property over a long period of time can be made compatible with each other.

In this case, the thickness of the surface layer 5 is preferably 1 $\mu$m to 5 $\mu$m. When the thickness of the surface layer 5 is 1 $\mu$m or more, the self-collapsing property in the early stage can be sufficiently obtained, and when the thickness of the surface layer 5 is 5 $\mu$m or less, the production can be performed inexpensively.

On the other hand, the thickness of the inner layer 4 is preferably 5 $\mu$m to 55 $\mu$m. When the thickness of the inner layer 4 is 5 $\mu$m or more, the maintenance of the self-collapsing property over a long period of time can be attained, and when the thickness of the inner layer 4 is 55 $\mu$m or less, the inner layer 4 can be produced inexpensively.

When the antistaining layer 3 is composed of three or more layers, the thickness of each of the layers forming the inner layer 4 is not particularly limited. However, the thickness of the intermediate layer(s) is preferably equal to or larger than the thickness of the surface layer 5, and the thickness of the deepest layer is preferably equal to or larger than the thickness of the intermediate layer(s). When the antistaining layer 3 has such a structure, the advantageous effect of the present invention can be uniformly displayed over a long period of time. It is to be noted that when the inner layer is formed of the deepest layer and the intermediate layer(s), the above-described thickness of the inner layer can be obtained as the sum of the thickness of the deepest layer and the thickness of the intermediate layer(s).

According to the present invention, a particularly excellent advantageous effect is displayed by adopting the following way: the antistaining layer 3 is formed of two or more layers, and then the surface layer 5 rapid in the rate of the self-collapse is formed so as to be thin and the inner layer 4 slow in the rate of the self-collapse is formed so as to be thick. This is ascribable to the fact that by disposing the surface layer 5, which is a thin layer to display the self-collapsing property at an early stage, on the surface of the inner layer 4, which takes time in developing the self-collapsing property, the clean surface free from the stains adhering thereto can be maintained, owing to the rather strong self-collapsing property of the surface layer 5, until the inner layer 4 develops the self-collapsing property. When the surface layer 5 is formed so as to be relatively thin, light energy partially passes through the surface layer 5 to reach the inner layer 4 under the condition that the surface layer 5 is being self-collapsed; thus, the photocatalyst present in the inner layer 4 receives the light energy and stores the light energy to some extent; and consequently, when the inner layer 4 is exposed on the surface, the inner layer 4 readily develops the self-collapsing property.

Alternatively, the antistaining layer 3 is formed of a single layer, and the content of the photocatalyst is regulated to be higher in the surface portion of the layer than in the interior portion of the layer, and consequently a similar structure can be obtained.

Alternatively, a photocatalyst having a strong activity such as titanium oxide is included in the surface portion of the antistaining layer 3, and a photocatalyst having a weaker activity, such as zinc oxide, than the activity of the photocatalyst in the surface portion is included in the interior portion of the antistaining layer 3, and consequently a similar structure can be formed. In this case, when the content of the photocatalyst having a strong activity in the surface portion is made higher than the content of the photocatalyst in the interior portion, having a weaker activity than the activity of the photocatalyst in the surface portion, it is possible to further enhance the tendency that the surface portion is stronger in the self-collapsing property than the interior portion.

Alternatively, a thermoplastic resin easily decomposable by the photocatalyst is used for the surface portion of the antistaining layer 3 and a resin more resistant to decomposition than the resin for the surface portion is used for the interior portion, and consequently, a similar structure can be formed. Also in this case, a concomitant use of another structure enables to further enhance the tendency that the surface portion is stronger in the self-collapsing property than the interior portion.

Alternatively, yet another technique can be applied. In other words, according to the present invention, the antistaining layer 3 is only required to be formed in such a way that the surface portion thereof is formed so as to be stronger in the self-collapsing property than the interior portion thereof, and accordingly, the technique to obtain such a structure is optional. For example, it is possible to regulate the self-collapsing property so as to have a variation characteristic that the self-collapsing property monotonically diminishes in the direction of the thickness of the antistaining layer 3, or other optional variation characteristics.

In the antistaining layer 3 having such a structure, the thickness of the antistaining layer 3 is preferably 6 $\mu$m to 60 $\mu$m, and more preferably 6 $\mu$m to 30 $\mu$m. The thickness falling in this range enables to follow the bending or folding of the antistaining sheet. When a fluororesin is used in the antistaining layer 3, adoption of a fluoroelastomer as the fluororesin provides an advantage that problems involving chaps and cracks are hardly caused.

In the antistaining sheet of the present invention, at the early stage of starting to use the antistaining sheet, the photocatalyst is exposed on the surface layer of the antistaining layer 3 to a slight extent. However, in the course of the use of the antistaining sheet, the photocatalyst in the surface layer portion thereof receives light energy and exposes the photocatalyst itself on the surface layer while decomposing the thermoplastic resin present as surrounding the photocatalyst. In this case, the decomposed thermoplastic resin collapses together with the stains adhering thereto, and is washed away, for example, by rain water at the time of rainfall. Thus, the photocatalyst is exposed on the surface layer and sufficiently develops the specific redox action, namely, the specific antistaining action. In the antistaining layer 3, the self-collapsing property is stronger in the surface portion than in the interior portion thereof. Consequently, in the surface portion, the photocatalyst decomposes the thermoplastic resin at an early stage, to enable to rapidly develop the specific antistaining action superior to the antistaining effect due to the above-described fluororesin, namely, the function to maintain a clean surface through the collapse of the surface of the antistaining layer 3 with stains adhering thereto.

The surface portion of the antistaining layer 3 is strong in the self-collapsing property as described above, and hence collapses in a relatively short period of time. Thereafter, the portion weaker in the self-collapsing property than the surface portion is exposed, and thus, the demanded antistaining property can be maintained over a long period of time.

In other words, according to the present invention, by strengthening the self-collapsing property of the surface portion of the antistaining layer 3, it is made possible to develop in an early stage the function to maintain the clean surface through the surface collapse of the antistaining layer 3; additionally, by suppressing the self-collapsing property of the interior portion of the antistaining layer 3 so as to be weaker than the self-collapsing property of the surface portion and to such an extent that the demanded antistaining property can be displayed, the early disappearance of the antistaining layer 3 due to an excessive self-collapse is prevented, and additionally, the demanded antistaining property can be maintained over a period corresponding to the product lifetime of the antistaining sheet.

It is to be noted that if the self-collapsing property is weakened over the whole of the antistaining layer 3, it is possible to develop the antistaining property over a long period of time. However, in such a case, it takes a long period such as a period of approximately a few years to start the development of the function to maintain the clean surface through the surface collapse of the antistaining layer 3, and hence such a case is far from being practical.

In each of the antistaining sheets shown in FIGS. 1 to 3, the antistaining layer 3 is laminated on the surface of the base material sheet 1; accordingly, two or more of these antistaining sheets, one of these antistaining sheets and another material, or the edge portions of two or more of these antistaining sheets can be easily bonded to each other by using a heat welding apparatus.

In the case where the edge portions of the antistaining sheets are superposed on each other to be bonded to each other, an adhesive layer is provided on the backside (the side opposite to the surface on which the antistaining layer 3 is disposed) of the base material sheet 1; then when on the antistaining layer 3 of one of the antistaining sheets, the base material sheet 1 of the other antistaining sheet is superposed, there occurs a structure in which the adhesive layer is interposed between the antistaining layer 3 and the base material sheet 1, and hence the antistaining layer 3 and the base material sheet 1 can be easily bonded to each other even when the compatibility between the antistaining layer 3 and the base material sheet 1 is low. For the adhesive layer, the above-described adhesives usable for laminating and integrating the base material sheet 1 and the antistaining layer 3 can be used similarly.

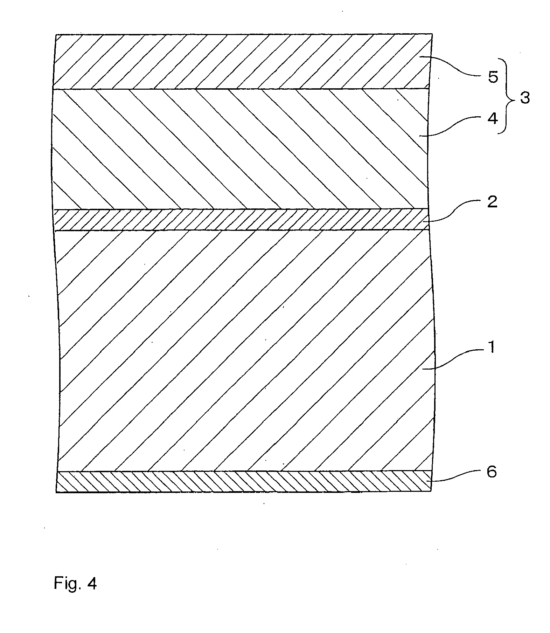

FIG. 4 shows a cross-sectional structure in the case where adhesive layers 2 and 6 are provided on the front-back both sides of a base material sheet 1, respectively, and further, an antistaining layer 3 is formed of two layers, namely, a surface layer 5 and an inner layer 4.

Example

In following Example and Comparative Examples, the thickness measurement method for the antistaining layer, the surface layer and the inner layer, and the particle size measurement method for the photocatalyst, the inorganic ultraviolet absorber and the like are as follows.

[Measurement of thickness]

Measurement was performed with a digital microscope VHX-900 manufactured by KEYENCE Corporation by enlarging the image of a section of a sample at a magnification of 250x to 2500x.

[Measurement of particle size]

A mass-average particle size was measured with a laser diffraction particle size distribution analyzer SALD-2100 manufactured by Shimadzu Corporation.

(Base material sheet)

As a base material sheet, a sheet prepared by impregnating a fabric made of a polyester fiber with polyvinyl chloride was used.

(Preparation of coating liquid 1)

A resin component composed of 70% by mass of polyvinylidene fluoride (PVDF)-polytetrafluoroethylene (PTFE) copolymer (trade name: kynar, manufactured by ARKEMA Inc.) as a fluororesin and 30% by mass of an acrylic resin (trade name: Acrypet, manufactured by Mitsubishi Rayon Co., Ltd.) as a thermoplastic resin was prepared.

Next, in relation to 100 parts by mass of the resin component composed of these two components, 1 part by mass of a mixture (trade name: Jupiter, manufactured by Showa Denko K.K.) as a photocatalyst, composed of particulate titanium dioxide and particulate silicon dioxide, both having a particle size of about 150 nm, and 1 part by mass of zinc oxide as an ultraviolet screening agent and 1 part by mass of a benzotriazole ultraviolet absorber (trade name: Tinuvin 326, manufactured by Ciba Japan K.K.) as an ultraviolet absorber were added.

Then, the resin component with the photocatalyst, the ultraviolet screening agent and the ultraviolet absorber added thereto was dispersed or dissolved in methyl ethyl ketone as a solvent in such a way that the mass ratio of the total solute to the solvent is 2:8, to prepare a coating liquid 1.

(Preparation of coating liquid 2)

As compared to the coating liquid 1, the amount of the photocatalyst was set at 7 parts by mass in relation to 100 parts by mass of the resin component. Otherwise, according to the procedures as adopted in the preparation of the coating liquid 1, a coating liquid 2 was prepared.

(Preparation of coating liquid 3)

As compared to the coating liquid 1, the amount of the photocatalyst was set at 10 parts by mass in relation to 100 parts by mass of the resin component. Otherwise, according to the procedures as adopted in the preparation of the coating liquid 1, a coating liquid 3 was prepared.

(Example)

Onto both sides of a base material sheet, an acrylic resin as an adhesive was applied with a knife coater so as to be 2 $\mu$m in thickness and dried to form adhesive layers. Then, onto one of the adhesive layers, the above-described coating liquid 1 was applied with an applicator so as to be 10 $\mu$m in thickness and dried to form the inner layer of an antistaining layer. Successively, onto the inner layer, the coating liquid 2 was applied with an applicator so as to be 3 μm in thickness and dried to form the surface layer of the antistaining layer. With the above-described procedures, an antistaining sheet was obtained. In the antistaining sheet, the self-collapsing property was found to be stronger in the surface layer of the antistaining layer than in the inner layer of the antistaining layer.

(Comparative Example 1)

Onto the surface of a base material sheet, an acrylic resin as an adhesive was applied with a knife coater so as to be 2 μm in thickness and dried to form an adhesive layer. Then, onto the adhesive layer, the coating liquid 3 was applied with an applicator so as to be 13 μm in thickness and dried to yield an antistaining sheet in which an antistaining layer was formed on the surface of the base material sheet. In the antistaining sheet of Comparative Example 1, the antistaining layer was of a single layer, and as described below, a photocatalyst was dispersed uniformly in the antistaining layer, and the self-collapsing property of the inner portion of the antistaining layer was found to be the same as the self-collapsing property of the surface portion of the antistaining layer.

(Comparative Example 2)

As compared to Comparative Example 1, the coating liquid 3 was altered to the coating liquid 1. Otherwise in the same manner as in Comparative Example 1, the sheet of Comparative Example 2 was obtained. In the sheet of Comparative Example 2, the antistaining layer was of a single layer, as in the sheet of Comparative Example 1, a photocatalyst was uniformly dispersed in the antistaining layer as described below, and the self-collapsing property of the inner portion of the antistaining layer was found to be the same as the self-collapsing property of the surface portion of the antistaining layer.

[Tests]

The antistaining sheets of Example, Comparative Example 1 and Comparative Example 2 were subjected to the following tests. The conditions of the tests were as follows.

(Film thickness retention rate)

In the outdoor in Japan where the sunlight was not screened, a sample was disposed so as for the antistaining layer of the sample to face the south and to have an angle of inclination of 45° from the ground. At every predetermined period of time, a cross-section of the sample was observed with a digital microscope VHX-900 manufactured by KEYENCE Corporation by enlarging the image of the cross-section of the sample at a magnification of 250x to 2500x, and thus the thickness of the antistaining layer was measured. The film thickness retention rate was calculated on the basis of the following formula.

```
Film thickness retention rate (%)
= Thickness of antistaining layer of a sample after a
predetermined period of time/thickness of antistaining
layer of a sample immediately after the start of the test
× 100
```

(Water contact angle)

By using black light, irradiation with ultraviolet light of 310 to 400 nm in wavelength at an irradiation strength of 1 mW/cm$^2$ was made so as to irradiate the whole surface of a sample for a predetermined time. For the regulation of the ultraviolet irradiation strength, an ultraviolet meter UM36 manufactured by Minolta Co., Ltd. was used. On a sample irradiated with ultraviolet light for a predetermined time, a drop of water was placed, and the contact angle at an elapse time of 30 seconds between the sample and the drop of water was measured with a contact angle measurement apparatus DCA-WZ manufactured by Kyowa Interface Science Co., Ltd.

(Element mapping measurement)

From each of the antistaining sheets of Example, Comparative Example 1 and Comparative Example 2, a sample was cut out, cooled with liquid nitrogen and cleaved by pressing a razor blade against the sample. The cross-section of the cleaved sample was subjected to carbon vapor deposition, and an element mapping was performed for titanium element with a field-emission-type scanning electron microscope (JSM-7600F (manufactured by JEOL Ltd.)), by enlarging the image of the cross-section of the sample at a magnification of 2000x.

(Results of tests)

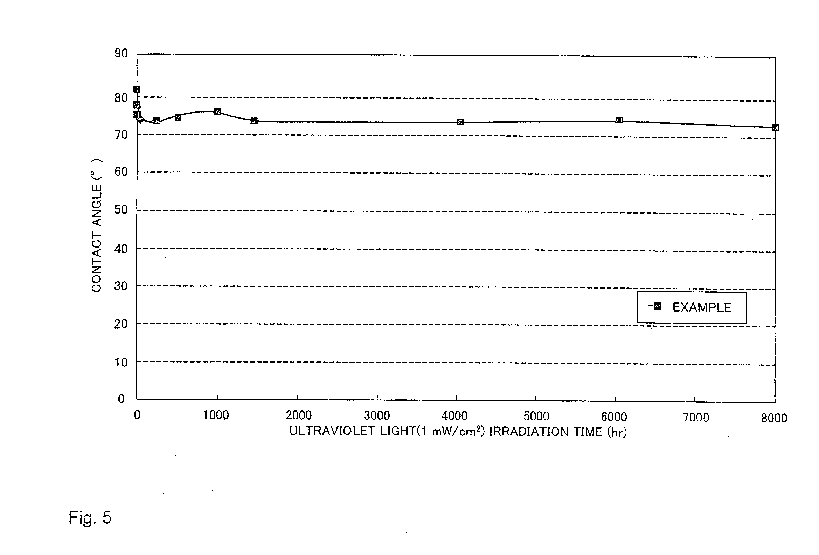

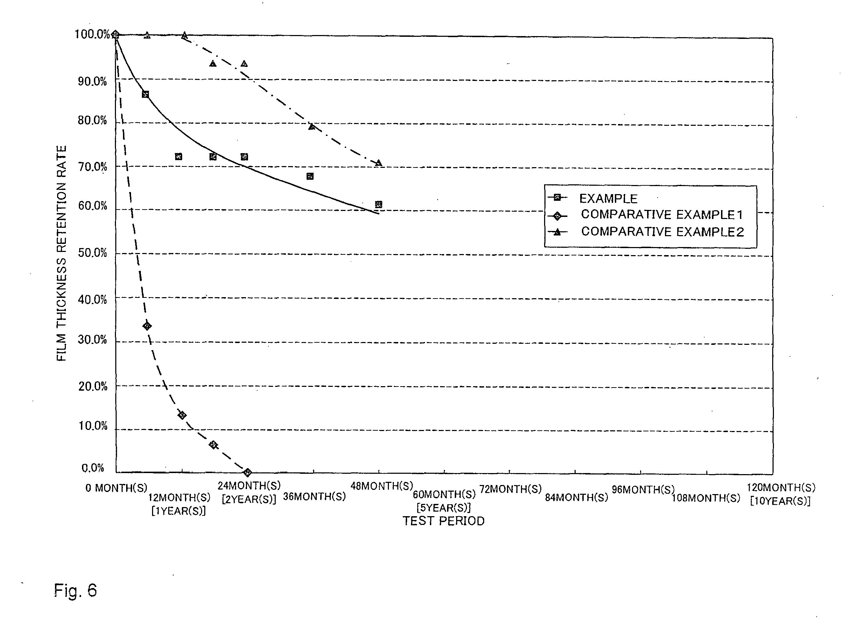

For the antistaining sheet of the Example, the antistaining property was satisfactory from the early stage, and the contact angle of a drop of water was constant to be about 70 to 80 degrees over the test period as shown in FIG. 5. From this fact, the case of the antistaining sheet of Example was verified to be different from the case of a known sheet in which the self-cleaning action is developed by decreasing the contact angle through the hydrophilization of the surface of the sheet by the hydrophilizing action of the photocatalyst, or in which the self-cleaning action is developed by increasing the contact angle with water by making the surface of the sheet water-repellent. As shown in FIG. 6, about 60% of the initial thickness of the antistaining layer was able to be retained at the elapse time of 4 years from the start of the test. Additionally, immediately from after the start of the use, the antistaining action based on the self-collapse of the antistaining layer was developed. Moreover, from the results of the element mapping measurement, the antistaining sheet of Example was verified to be such that titanium element is more abundant in the surface layer than in the inner layer. Due to the structure in which an adhesive layer was also provided on the backside of the base materials sheet, when high-frequency welding was conducted for two antistaining sheets with the edge portions thereof superposed on each other, the two antistaining sheets were satisfactorily bonded to each other.

The antistaining sheet of Comparative Example 1 was satisfactory in the antistaining property from the early stage similarly to Example. However, as shown in FIG. 6, at the elapse time of 2 years from the start of the test, the antistaining layer was completely decomposed to disappear. Additionally, from the results of the element mapping measurement, the antistaining sheet of Comparative Example 1 was verified to be such that the abundance of titanium element in the interior portion of the antistaining layer was comparable with the abundance of titanium element in the surface portion of the antistaining layer.

As shown in FIG. 6, in the antistaining sheet of Comparative Example 2, the thickness of the antistaining layer was found to retain 70% of the initial thickness at the elapse time of 4 years. However, within 1 year from the start of the test, the film thickness retention rate was 100%, and hence the function to maintain the clean surface due to the self-collapse of the surface of the antistaining layer was not developed, and hence no sufficient antistaining property was obtained at the early stage. Additionally, from the results of the element mapping measurement, the antistaining sheet of Comparative Example 2 was verified to be such that the abundance of titanium element in the interior portion of the antistaining layer was comparable with the abundance of titanium element in the surface portion of the antistaining layer.

Industrial Applicability

The antistaining sheet of the present invention has, over a long period of time from the early stage, the function (self-renewal function) to maintain the clean surface due to the self-collapse of the surface, and hence can be preferably used in the applications in which a sheet is spread and tensioned. Accordingly, the antistaining sheet of the present invention is used, for example, for truck cover materials, awning materials, tent warehouse membrane materials, medium- and large-sized tent membrane materials, ceiling materials and advertising display sheet materials.

**Claims**

1.   An antistaining sheet comprising a base material sheet and an antistaining layer formed on a surface of the base material sheet, wherein:

the antistaining layer comprises two or more layers inclusive of an inner layer and a surface layer stronger in self-collapsing property than the inner layer;
the inner layer and the surface layer each comprise a photocatalyst and a thermoplastic resin to be decomposed by the photocatalyst, and thus have a self-collapsing property; and
the content of the photocatalyst in the surface layer is higher than that of the inner layer, such that the self-collapsing property of the antistaining layer is stronger in a surface portion of the antistaining layer than in an interior portion of the antistaining layer.

2. An antistaining sheet according to claim 1, wherein the inner layer and the surface layer further comprise a fluororesin.

3. An antistaining sheet according to one or more of the preceding claims, wherein the photocatalyst is a mixture composed of a photocatalyst and an inorganic material, or a coated material prepared by coating a photocatalytic material with an inorganic material.

4. An antistaining sheet according to one or more of the preceding claims, wherein the content of the photocatalyst in the surface layer is 5 parts by mass to 15 parts by mass in terms of the solid content of the photocatalyst in relation to 100 parts by mass of the resin component constituting the surface layer, and the content of the photocatalyst in the inner layer is 0.01 parts by mass to 3 parts by mass in terms of the solid content of the photocatalyst in relation to 100 parts by mass of the resin component constituting the inner layer.

5. The antistaining sheet according to claim 1, wherein a ratio of a content of the photocatalyst in the surface layer to a content of the photocatalyst in the inner layer is 1500:1 to 5:3.

6. The antistaining sheet according to claim 1, wherein a ratio of a thickness of the surface layer to a thickness of the inner layer is 1:1 to 1:30.

7. The antistaining layer according to claim 1, wherein the thickness of the surface layer is 1 $\mu$m to 5 $\mu$m.

**Patentansprüche**

1. Antistatische Lage, die eine Grundmateriallage und eine auf einer Oberfläche der Grundmateriallage gebildete antistatische Schicht aufweist, wobei:

   die antistatische Schicht zwei oder mehr Schichten einschließlich einer inneren Schicht und einer Oberflächenschicht aufweist, die hinsichtlich ihrer selbstversagenden Eigenschaften stärker ist als die innere Schicht;
   die innere Schicht und die Oberflächenschicht jeweils einen Fotokatalysator und ein von dem Fotokatalysator zu zersetzendes thermoplastisches Harz aufweisen und damit eine selbstversagende Eigenschaft aufweisen; und
   der Gehalt des Fotokatalysators in der Oberflächenschicht höher ist als derjenige der inneren Schicht, so dass die selbstversagende Eigenschaft der antistatischen Schicht in einem Oberflächenbereich der antistatischen Schicht höher ist als in einem inneren Bereich der antistatischen Schicht.

2. Antistatische Lage nach Anspruch 1, wobei die innere Schicht und die Oberflächenschicht des Weiteren einen Fluorkunststoff aufweisen.

3. Antistatische Lage nach einem oder mehreren der vorhergehenden Ansprüche, wobei der Fotokatalysator eine Mischung ist, die aus einem Fotokatalysator und einem anorganischen Material zusammengesetzt ist, oder ein beschichtetes Material, das durch Beschichten eines Fotokatalysatormaterials mit einem anorganischen Material hergestellt wurde.

4. Antistatische Lage nach einem oder mehreren der vorhergehenden Ansprüche, wobei der Gehalt des Fotokatalysators in der Oberflächenschicht 5 Massenanteile bis 15 Massenanteile in Bezug auf den Feststoffgehalt des Fotokatalysators bezüglich 100 Massenteile der die Oberflächenschicht bildenden Harzkomponente ist, und der Anteil des Fotokatalysators in der inneren Schicht 0,01 Massenteile bis 3 Massenteile in Bezug auf den Feststoffgehalt des Fotokatalysators bezüglich 100 Massenteile der die innere Schicht bildende Harzkomonente ist.

5. Antistatische Lage nach Anspruch 1, wobei ein Verhältnis eines Gehalts des Fotokatalysators in der Oberflächenschicht zu einem Gehalt des Fotokatalysators in der inneren Schicht 1500:1 bis 5:3 ist.

6. Antistatische Lage nach Anspruch 1, wobei ein Verhältnis einer Dicke der Oberflächenschicht zu einer Dicke der inneren Schicht 1:1 bis 1:30 beträgt.

7. Antistatische Schicht nach Anspruch 1, wobei die Dicke der Oberflächenschicht 1 $\mu$m bis 5 $\mu$m beträgt.

**Revendications**

1. Feuille antitaches comprenant une feuille de matériau de base et une couche antitaches formée sur une surface de la feuille de matériau de base, dans laquelle :

   la couche antitaches comprend deux couches ou plus incluant une couche intérieure et une couche superficielle ayant une propriété d'autocompression plus forte que la couche intérieure ;
   la couche intérieure et la couche superficielle comprennent chacune un photocatalyseur et une résine thermoplastique devant être décomposée par le photocatalyseur, et ayant ainsi une propriété d'autocompression ; et
   la teneur en photocatalyseur dans la couche superficielle est supérieure à celle de la couche intérieure de sorte que la propriété d'autocompression de la couche antitaches est plus forte dans la portion de la surface de la couche antitaches que dans une portion intérieure de la couche antitaches.

2. Feuille antitaches selon la revendication 1, dans laquelle la couche intérieure et la couche superficielle comprennent en outre une fluororésine.

3. Feuille antitaches selon une ou plusieurs des revendications précédentes, dans laquelle le photocatalyseur est un mélange constitué d'un photocatalyseur et d'une matière inorganique, ou d'une matière revêtue préparée par revêtement d'un matériau photocatalytique avec une matière inorganique.

4. Feuille antitaches selon une ou plusieurs des revendications précédentes, dans laquelle la teneur en photocatalyseur dans la couche superficielle est de 5 parties en poids à 15 parties en poids en termes de teneur en solides du photocatalyseur, par rapport à 100 parties en poids du composant de résine constituant la couche superficielle, et la teneur en photocatalyseur dans la couche intérieure est de 0,01 partie en poids à 3 parties en poids en termes de teneur en solides du photocatalyseur, par rapport à 100 parties en poids du composant de résine constituant la couche intérieure.

5. Feuille antitaches selon la revendication 1, dans laquelle un rapport entre une teneur en photocatalyseur dans la couche superficielle et une teneur en photocatalyseur dans la couche intérieure est de 1500/1 à 5/3.

6. Feuille antitaches selon la revendication 1, dans laquelle un rapport entre une épaisseur de la couche superficielle et une épaisseur de la couche intérieure est de 1/1 à 1/30.

7. Couche antitaches selon la revendication 1, dans laquelle l'épaisseur de la couche superficielle est de 1 $\mu$m à 5 $\mu$m.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005271490 A
- JP 9078454 A
- JP 2005042257 A
- JP 2001064583 A